# EUROPEAN PATENT APPLICATION

(11) **EP 3 666 088 A1**
(43) Date of publication of application: **17.06.2020**
(21) Application number: 19187554.1
(22) Date of filing: 22.07.2019
(51) Int. Cl.: A23L 7/126, A21D 8/02, A21D 13/047, A21D 13/24, A21D 13/28, A21D 13/80, A23L 7/17, A23L 7/191

(54) **THE RICE CRISPBREADS FOR CHILD NUTRITION AND A METHOD FOR MANUFACTURING THEREOF**

(30) Priority: 13.12.2018 RU 2018144210
(71) Applicant: Otkrytoe aktsionernoe obshchestvo "Khlebprom", Chelyabinsk, Chelyabinskaya 454014 (RU)
(72) Inventor: KOVALCHUK GRIGOREVNA, Tatyana, 215800 YARTSEVO YARTSEVSKIJ R-N, SMOLENSKAYA (RU)
(74) Representative: Studio Torta S.p.A.

(57) **Abstract**

This group of inventions relates to the food industry and concerns breadmaking, in particular a method for manufacturing and a composition of the rice crispbreads, which are a product of dietary and functional nutrition. This group of inventions discloses a composition of the rice crispbreads containing rice grits, water and a flavouring additive, which includes concentrated fruit and/or vegetable juice or a mixture of fruit and/or vegetable juices in a mixture with berry and/or fruit puree, a natural flavour, beta-carotene in the following ratio of the components, wt. %: water - 0.7-9,8; rice grits - 50.00-66.0; concentrated fruit and/or vegetable juice or a mixture of fruit and/or vegetable juices - 6.0-36.0; berry and/or fruit puree or a mixture of berry and/or fruit puree - 6.0-36.0; a natural flavour - the rest. At the same time, in one of the embodiments of the invention, the flavouring additive additionally contains beta-carotene - 0.05-0.1 wt. % and/or iodized salt - 0.2-1.0 wt. %, and/or cane sugar - 20.0-24.0 wt. %. In addition, this group of inventions describes a method for manufacturing of the rice crispbreads, according to which the raw materials composition includes the use of rice grits, water and a flavouring additive, which includes concentrated fruit and/or vegetable juice or a mixture of fruit and/or vegetable juices in a mixture with berry and/or fruit puree, a natural flavour; a treatment of the rice grits by purifying them from impurities and subsequent moistening with water; extruding the finished rice grits with simultaneous baking and briquetting; applying the flavouring additive on a surface of the crispbreads by spraying, the components for manufacturing of the crispbreads being taken according to the above qualitative and quantitative composition. The technical result of the claimed group of inventions consists in the realization of the said product and the method for manufacturing thereof, as a result of which a new product of dietary and functional nutrition being distinguished by its taste quality is obtained, which is intended for direct consumption as an additional source of food fibers for the children from one year old.

## Description

### TECHNICAL FIELD

The group of inventions relates to the food industry and concerns breadmaking, in particular a method for manufacturing and a composition of the rice crispbreads, which are a product of dietary and functional nutrition.

### PRIOR ART

The crispbreads, which contain a mixture of corn and banana flour, egg powder, rice starch, salt, a sweetener, are known from patent of the RF No. 2579253 C1 published on 10.04.2016.

The disadvantage of the said composition is the use of not rice grits or whole corn grains, but rice starch and corn flour, which have a low (compared to whole grain) content of food fibers.

A composition for manufacturing of a crispbread type grain extruded product is known from patent of the RF No. 2127534 C1 published on 20.03.1999, which contains the grain material, in capacity of which wheat flour of the 2nd grade and dark rye flour was used in the following ratio of the components, wt. %: dark rye flour 30.0-50.0; boiled salt 1.0-2.5; wheat flour the 2nd grade - the rest.

The obtained product has a high nutritional value and high organoleptic characteristics, but the presence of gluten in the product composition does not allow using it for a wide range of the population, including in child nutrition. In addition, the use of flour instead of whole grains reduces the content of food fibers.

An invention, which relates to the food industry and can be used in the manufacture of the baked crispbreads in the form of dry, brittle, light porous plates, is known from patent of the RF No. 2619762 C9 published on 18.05.2017. Extrusion grain flour includes wheat grain, fermented rye malt, rye grain, salt, dry malt starter, coriander, oat grits, the natural dye "sugar colour," tocopherol, lecithin and vitamin and mineral complex. To obtain it, the raw materials components are mixed, moistened and softened during 4-12 hours to moisture of 14-16%, the raw materials are grinded and heated up to the temperature of 140-180° C, followed by extruding, after which the resulting product is baked in tunnel oven chambers at the temperature of 100-180° C during 1-3 minutes. The semi-finished product is cooled and grinded. The baked crispbreads include extrusion grain flour, vegetable oil, dry malt starter, boiled salt, sugar and fermented rye malt. Dough is manufactured by mixing the raw materials with water to homogenized consistency, it is rolled, cut and baked at the temperature of 205-235° C during 8-13 minutes, cooled, prepacked and packaged.

The essential difference of the technology for manufacturing of grain bread according to patent of the RF No. 2619762 C9 from the claimed method for manufacturing of grain crispbreads is that dough is manufactured from the product obtained by grinding cereal grains. The presence of the products that can pose a threat to the consumer's health in the raw materials composition should be referred to the disadvantages of this method.

A composition for manufacturing of crispbreads containing the grain material in the form of a mixture of pure rye flour, dark rye flour and wheat flour of the 1st grade, bakery compressed yeast, boiled salt, sand sugar, unsalted butter is known (Eds. Sulimanova G.V. A collection of recipes for bread and bakery products (Rusk products. Crispbreads). M., "Agropromizdat," 1986).

The manufacturing of the crispbreads according to the said recipe is performed by a traditional method involving kneading yeast dough, its fermentation, forming crispbreads, their proofing, baking, drying, cooling and packaging. In order to ensure porosity and brittleness of the finished crispbreads, high grade bakery flour is used as the main raw materials and compressed yeast is used as baking powder. The crispbreads manufactured according to the said recipe have a taste and odour characteristic of this kind of a grain product.

The disadvantages of the well-known composition for manufacturing of crispbreads are: the need for the use of expensive, marketable raw materials to obtain the crispbreads with high organoleptic characteristics: high grade bakery flour and compressed yeast, a low nutritional value of the finished crispbreads due to their high energy value (caloric value) because of the presence of sugar and fat in the composition, as well as their low dietary properties due to the low content of bran substances.

A dry mixture for manufacturing of a swollen food product containing native starch (made of potato, wheat, corn or their mixture); native tahioca starch; maltodextrin; modified gelatinized starch (made of potato, wheat, corn or their mixture); an aromatic or flavour ingredient, is known (Application for the European patent No. 0367031 published on 09.05.1990).

The manufacturing of a food product according to the said recipe is performed by an extruding method, which allows obtaining a loosen and porous finished product without using yeast as baking powder.

The disadvantage of the well-known dry mixture is a low nutritional value of the finished swollen product due to a high energy value (caloric value) of the finished product because of the use of high-calorific starch-containing raw materials, and also due to its low dietary properties because of the absence of the bran substances in it, which have a normalizing effect on the motor function of the intestine and the biliary tract. In addition, the food product manufactured from the said dry mixture does not possess the brittleness, taste and odour, which are characteristic of the traditional crispbreads.

A composition for manufacturing of a grain extruded product containing oat and corn bran and corn flour as the grain material, is known (Patent of the USA No. 5169662 published on 08.12.1991).

The swollen grain product contains more than 10% of protein and it has quite high dietary properties due to the presence of bran substances in its composition. However, the well-known grain product does not possess the taste and odour, which are characteristic of the traditional crispbreads. The disadvantages of the well-known composition for manufacturing of the grain extruded product are: a low nutritional value of the finished product due to the presence in its composition of high-calorific corn flour as the main source of protein.

A composition of the crispbreads, which contains the grain material, flavour additives and fruit and berry puree is known from patent of the RF No. 2672387 C1 published on 14.11.2018. A mixture of flour from white lupine seeds, flour from flax seeds and buckwheat flour is used as a grain material in the following ratio of the components, wt. %: flour from white lupine seeds - 20.0-40.0; flour from flax seeds - 15.0-20.0; buckwheat flour - 3,0-5,0; flavour additives - 1.0-2.5; fruit and berry puree - the rest.

This technical solution provides the use of fruit and berry puree instead of sugar-containing sweeteners, etc., however, the flour, which in comparison with whole grain contains a low amount of food fibers is used as the main grain material.

A composition and a method disclosed in patent of the RF No. 2603913 C1 published on 10.12.2016 are the most close ones to the claimed technical solution according to the features characterizing it, which are chosen as the nearest analogue. A composition of the raw materials for obtaining the crispbreads, which include whole wheat grains, at least one kind of grits and a flavouring additive in the form of syrup, is known from patent of the RF No. 2603913 C1. A grain mixture is treated by purifying it from impurities and subsequent moistening with water. The finished grain mixture is extruded with simultaneous baking and briquetting. A flavouring additive in the form of syrup is applied on a surface of the briquette by spraying. The syrup composition includes the following ratio of the components, wt. %: fructose - 24.5-75; sucralose - 0.03-1.0; a flavour - 0.8-4.5; salt - 0.07-4.0; juice/a mixture of juices or a juice extract/mixtures of juices, or honey - 1.0-3.0.

The disadvantage of the invention is the presence of fructose in the syrup composition, what limits the consumption of such product by the consumer prone to allergic reactions and diabetes, and it also makes impossible for the young children to use the product.

The said disadvantages of the above solution are eliminated by improving the qualitative and quantitative composition of the rice crispbreads and the method for manufacturing thereof disclosed in this invention.

### DISCLOSURE OF THE GROUP OF INVENTIONS

This group of inventions covers the dietary food products intended for nutrition of the young children (from one year to three years old) -depending on the range, the preschool age children (from 3 to 6 years old), the school age children (from 6 years old and older), because the use of the ingredients (gluten, GMOs, vegetable fats, artificial flavours and food dyes, preservation agents) that can harm the children health is not permissible for child nutrition.

The product is brittle light bars of various shapes, manufactured from rice grits of the first grade, water, fruit/berry/vegetable juice or their mixtures and fruit and/or berry puree. It is possible to add natural food flavours (flavouring substances) to give a peculiar aroma and taste, it is possible to add natural food dyes to give a colour, including natural fruit or vegetable juices, while adding or without adding: vitamin and vitamin/mineral complexes (premixes).

A surface of products can be artistically dressed with glaze, chocolate, etc., as well as with other kinds of artistic dressing. Depending on a recipe, shape and size, the product is manufactured in a wide range with fantasy names attracting the attention of the children.

The rice crispbreads claimed in this invention is a dietary product, as there are coarse indigestible food fibers that help to remove toxins and slags from the body in the rice crispbreads. Swollen rice grains have a beneficial effect on the intestinal peristalsis, normalize metabolism and they are the suppliers of complex carbohydrates, which saturate and replenish the energy reserves for a long time. The product does not contain gluten, GMOs, artificial food dyes and flavours, preservation agents and it is a perfect supplement to nutrition. The rice crispbreads, depending on a flavouring additive, can optionally be combined with different products.

The task of this group of inventions is to eliminate the disadvantages of the prior art, the development of a useful and dietary product that is not capable of harming the health of the consumer, as well as expanding a range of bakery products for the children from one year old.

The technical result of the claimed group of inventions consists in the realization of the said product and the method for manufacturing thereof, as a result of which a new product of dietary and functional nutrition being distinguished by its taste quality is obtained, which is intended for direct consumption as an additional source of food fibers for the children from one year old.

This technical result is achieved due to the rice crispbreads composition containing rice grits, water and a flavouring additive, which includes concentrated fruit and/or vegetable juice or a mixture of fruit and/or vegetable juices in a mixture with berry and/or fruit puree, a natural flavour in the following ratio of the components, wt. %:

| | |
|---|---|
| water | 0.7-9.8 |
| rice grits | 50.0-66.0 |
| concentrated fruit and/or vegetable juice or a mixture of fruit and/or vegetable juices | 6,0-36,0 |
| berry and/or fruit puree or a mixture of berry and/or fruit puree | 6.0-36.0 |
| a natural flavour | The rest. |

At the same time, the flavouring additive in one of the embodiments of the invention additionally contains beta-carotene - 0.05-0.1 wt. % and/or iodized salt - 0.2-1.0 wt. %, and/or cane sugar - 20.0-24.0 wt. %.

At the same time, the ratio of the different kinds of juices in the mixture may be, for example, 1:1 or 1:2; 1:3; 1:4.

At the same time, the ratio of the different kinds of puree in the mixture may be, for example 1:1 or 1:2; 1:3; 1:4.

In addition, the said technical result is achieved due to the method for manufacturing of the rice crispbreads, according to which the raw materials composition includes the use of rice grits, water and a flavouring additive, which includes concentrated fruit and/or vegetable juice or a mixture of fruit and/or vegetable juices in a mixture with berry and/or fruit puree, a natural flavour; a treatment of the rice grits by purifying them from impurities and subsequent moistening with water; extruding the finished rice grits with simultaneous baking and briquetting; applying the flavouring additive on a surface of the crispbreads by spraying, the components for manufacturing of the crispbreads being taken according to the above qualitative and quantitative composition.

At the same time, moistening the rice grits is performed in vertical mixers during 1-1.5 hours at mixing, while moisture of the finished moistened rice grits is 17.5-18.5%.

At the same time, extruding the moistened rice grits is performed under pressure of 130-140 bar between the press-forms heated up to 240-260° C.

At the same time, when manufacturing the flavouring additive, at first the concentrated fruit and/or vegetable juice or their mixture is heated up to the temperature of 52-53° C.

At the same time, sunflower lecithin in the amount of 50 g per 100 kg of the rice grits is used as a surfactant to hold water on a surface of the grits, having beaten up preliminary this lecithin with room temperature water by a mixer.

At the same time, drying the crispbreads is performed at the temperature of 107-115° C.

### IMPLEMENTATION OF THE GROUP OF INVENTIONS

The uniqueness of the new product (the rice crispbreads) obtained by the claimed method consists in the fact that it is manufactured from whole rice grits of the 1st grade, due to which the product has a high percentage (up to 60%) of food fibers, and it also contains easy digestible by the human body fruit and/or berry juice and puree or vegetable juice and fruit and/or berry puree containing fiber.

The raw materials for manufacturing of the rice crispbreads in one of the embodiments of the invention may additionally contain cane sugar, which is known to be a result of direct squeezing cane juice. The juice is boiled down to syrup and the crystallization process occurs. Unlike white sugar from sugar beet, cane sugar is not exposed to bleaching by means of sulfur dioxide or carbonic acid. Just like white sugar, it consists 99% of sucrose, but it has more useful elements - iron, calcium, phosphorus. In addition, cane sugar has a characteristic caramel odour and a taste of treacle.

The raw materials for manufacturing of the rice crispbreads in one of the embodiments of the invention may additionally contain beta-carotene of natural origin, which, due to its antioxidant properties facilitates strengthening immunity, reduces the risk of infectious diseases, softens the effects of adverse environmental factors such as electromagnetic radiation, chemical and radioactive contaminations, and it also increases the adaptive capacity of the body and stress tolerance. In the food industry, beta-carotene is also used as a food dye, which encolours products into the tints from yellow to bright red depending on its concentration.

Extruding, which the treated (purified from impurities and moistened) grain is exposed to is a complex physical and chemical process, which includes: a thermal treatment of the product under pressure; a mechanochemical deformation of the product; an "explosion" of the product in a shock discharging front.

When extruded, the water in the grain boils at a high temperature, the grain bursts (swells) and, due to high pressure, it is immediately formed into a briquette. As a result of the thermal treatment, the taste quality of the product is improved (a pleasant odour and taste), because various aromatic substances, etc. are formed, the enzymes activity to digest it increases significantly, the nutritional value of the product almost doubles.

The flavouring additive influencing on the taste quality of the rice crispbreads is manufactured from a mixture of ingredients: berry and/or fruit or vegetable juice and berry and/or fruit puree, a natural flavour. In one of the embodiments of the invention, this taste in combination with cane sugar becomes more enhanced - a caramel one.

Berry juice and puree (blueberries, cranberries, raspberries, cherries, etc.) or fruit juice and puree (apple, banana, lemon, pineapple, etc.), or a vegetable one (for example, carrot, beet, pumpkin, etc.) are present in the composition of the flavouring additive as a concentrate. The concentrated juices and puree contain organic acids. In one of the embodiments of the invention, they, in combination with cane sugar, contribute a pleasant sour sweet taste to an additive being applied on the crispbreads and, consequently, to the crispbreads themselves. This is confirmed by the results of tastings performed at the enterprise, while developing these kinds of rice crispbreads.

Any natural flavours with different tastes can be used as a flavour included in the flavouring additive composition.

It should be noted that the minimum amount of fats, which are contained only in the rice grains are present in the crispbreads.

The taste quality of the finished product obtained by the claimed method is achieved not only by the said composition of the flavouring additive, but also by the used method for applying it on the crispbreads.

There are various technological methods for applying flavour (flavouring) additives. Dry applying, for example, consists in that vegetable oil in a small amount is applied on the product (other kinds of oils are possible to be applied), then the product is sprinkled with dry mixtures (powdered sugar, lactose, maltodextrin, with an addition of dry flavours). As to the claimed method for manufacturing of the rice crispbreads, the flavoring additive is applied on their surface by spraying through a spray-chamber with the help of nozzles followed by drying.

Vegetable oil, powdered sugar, lactose and maltodextrin are not used in the said technology of applying a flavouring additive. The additive covers the crispbreads with a uniform thin layer; only the product that has already been completely covered is exposed to drying. In an embodiment of the invention, where cane sugar is added to a flavoring additive composition, the crispbreads after drying are covered with a thin crispy caramel crust.

The obtained crispbreads are a fragile, slightly breaking product of a various shape with a rough surface and a relief in the form of inflated grains (there may be small blisters, grooves, separate inclusions of flavour additives) and a colour, which is characteristic of the original raw materials. A view of in the fracture is well-loosened, with developed porosity, baked, dried, without any features of being undermixed.

The crispbreads are covered with a flavouring additive on both sides.

The examples of a composition of specific products are given and a method for manufacturing thereof is described in detail to serve evidence of the possibility of the implementation of the claimed invention.

### Example 1.

The rice crispbreads with banana.

| **The raw materials name** | **The raw materials consumption, in wt. %** |
|---|---|
| Water | 0.7 |
| Rice grits of the 1 st grade | 63.0 |
| Concentrated apple juice | 24.0 |
| Banana puree | 12.0 |
| The natural flavour "Banana" | 0.25 |
| Beta-carotene | 0.05 |
| Total: | 100 |

### Example 2.

The rice crispbreads with apple.

| **The raw materials name** | **The raw materials consumption, in wt. %** |
|---|---|
| Water | 0.7 |
| Rice grits of the 1st grade | 56.7 |
| Concentrated beet juice | 6.0 |
| Concentrated apple juice | 24.0 |
| Apple puree | 12.0 |
| The natural flavour "Apple" | 0.6 |
| Total: | 100 |

### Example 3.

The rice crispbreads with pear.

| **The raw materials name** | **The raw materials consumption, in wt. %** |
|---|---|
| Water | 4.8 |
| Rice grits of the 1 st grade | 52.9 |
| Concentrated pear juice | 30.00 |
| Pear puree | 10.00 |
| The natural flavour "Pear" | 2.3 |
| Total: | 100 |

### Example 4.

The rice crispbreads with berries.

| **The raw materials name** | **The raw materials consumption, in wt. %** |
|---|---|
| Water | 0.7 |
| Rice grits of the 1st grade | 62.7 |
| Concentrated apple juice | 24.0 |
| Concentrated strawberry juice | 6.0 |
| Raspberry puree | 3.0 |
| Blueberry puree | 3.0 |
| The natural flavour "Strawberry" | 0.6 |
| Total: | 100 |

### Example 5.

The rice crispbreads with caramel.

| **The raw materials name** | **The raw materials consumption, in wt. %** |
|---|---|
| Water | 9.8 |
| Rice grits of the 1 st grade | 56.5 |
| Cane sugar | 20.0 |
| The natural flavour "Caramel" | 0.6 |
| Iodized salt | 1.0 |
| Apple puree | 6.0 |
| Concentrated beet juice | 6.0 |
| Beta -carotene | 0.1 |
| Total: | 100 |

### Example 6.

The rice crispbreads with pear and caramel.

| **The raw materials name** | **The raw materials consumption, in wt. %** |
|---|---|
| Water | 7.2 |
| Rice grits of the 1 st grade | 56 |
| Cane sugar | 24.0 |
| The natural flavour "Caramel" | 0.5 |
| Iodized salt | 0.2 |
| Pear puree | 6.0 |
| Concentrated beet juice | 6.0 |
| Beta -carotene | 0.1 |
| Total: | 100 |

### Example 7.

The rice crispbreads with strawberries and banana.

| **The raw materials name** | **The raw materials consumption, in wt. %** |
|---|---|
| Water | 0.8 |
| Rice grits of the 1 st grade | 63.0 |
| Concentrated apple juice | 18.0 |
| Concentrated strawberry juice | 6.0 |
| Banana puree | 9.0 |
| Strawberry puree | 3.0 |
| The natural flavour "Banana" | 0.2 |
| Total: | 100 |

### Example 8.

The rice crispbreads with banana and apple.

| **The raw materials name** | **The raw materials consumption, in wt. %** |
|---|---|
| Water | 0.7 |
| Rice grits of the 1 st grade | 60.0 |
| Concentrated apple juice | 30.0 |
| Banana puree | 6.0 |
| Apple puree | 3.0 |
| The natural flavour "Banana" | 0.3 |
| Total: | 100 |

### Example 9.

The rice crispbreads with pear and apple.

| **The raw materials name** | **The raw materials consumption, in wt. %** |
|---|---|
| Water | 3.2 |
| Rice grits of the 1 st grade | 66.0 |
| Concentrated apple juice | 12.0 |
| Concentrated pear juice | 6.0 |
| Apple puree | 6.0 |
| Pear puree | 3.0 |
| The natural flavour "Pear" | 3.8 |
| Total: | 100 |

### Example 10.

The rice crispbreads with apple and broccoli.

| **The raw materials name** | **The raw materials consumption, in wt. %** |
|---|---|
| Water | 1.0 |
| Rice grits of the 1 st grade | 62.0 |
| Concentrated apple juice | 24.0 |
| Broccoli puree | 12.0 |
| The natural flavour "Apple" | 1.0 |
| Total: | 100 |

### Example 11.

The rice crispbreads with pumpkin and mango.

| **The raw materials name** | **The raw materials consumption, in wt. %** |
|---|---|
| Water | 0.7 |
| Rice grits of the 1 st grade | 50.0 |
| Concentrated apple juice | 12.0 |
| Pumpkin puree | 24.0 |
| Mango puree | 12.0 |
| The natural flavour "Mango" | 1.3 |
| Total: | 100 |

### Example 12.

The rice crispbreads with apple and cauliflower.

| **The raw materials name** | **The raw materials consumption, in wt. %** |
|---|---|
| Water | 0.8 |
| Rice grits of the 1 st grade | 50.0 |
| Concentrated apple juice | 36.0 |
| Cauliflower puree | 6.0 |
| Apple puree | 6.0 |
| The natural flavour "Apple" | 1.2 |
| Total: | 100 |

The method for manufacturing of the product consists of the following steps:
- accepting the raw materials;
- treating the raw materials for manufacturing;
- baking the crispbreads;
- applying the flavouring additive on a surface of the crispbreads;
- manufacturing the flavouring additive;
- drying the crispbreads;
- packaging the product.

### Accepting the raw materials.

The raw materials are accepted by mass and quality and they are exposed to an input control for the compliance with the norms with respect to each kind of the raw materials. Each batch of the raw materials must be accompanied by a conformity certificate and a quality certificate. The used raw materials are stored in accordance with the applicable standards and specifications for them.

### A treatment of the raw materials for manufacturing.

Rice grits: rice of the first grade undergoes purification on the separator "Almaz" intended for separating from the grits the impurities, which are different from it by the aerodynamic properties or it undergoes purification through a photoelectronic separator.

The purified grits are fed into vertical mixers for moistening. Moistening is an important technological operation that influence on the quality of the product. Moistening the rice occurs in the vertical mixers during 1-1.5 hours; the grits are periodically mixed for a uniform distribution of moisture. The amount of water required for moistening depends on original moisture of the grits. Moisture is determined by means of a moisture meter. Moisture of the finished moistened rice grits should be 17.5-18.5%. Sunflower lecithin in the amount of 50 g per 100 kg of the grits may be used as a surfactant to hold water on a surface of the grits, having beaten up preliminary this lecithin with room temperature water by a mixer. The moistened mixture from the mixer is fed by a vacuum loader into the grain processor bins for baking.

### Baking the crispbreads - extruding.

The moistened mixture is fed into a funnel of the grain processor, and with the help of a feeder, it enters the press-forms in the bowl, which is formed by lowering the lower press-form, where the grain is fluffed and baked during a certain time.

| | |
|---|---|
| The temperature of the top stove is | 240-260° C |
| The temperature of the bottom stove is | 240-260° C |
| The time of baking is | 3.5-4.5 sec |
| The time of pressing is | 2.0 sec |
| Pressure in a hydraulic system is | 130-140 bar |

The finished crispbread has an average weight of 1.2-1.4 g.

### Applying the flavouring additive on a surface of the crispbreads.

Subsequently, the crispbreads are fed by a transporting conveyor through a cleaning drum into a vibro-sorting-guiding table designed for the arrangement of the briquettes and a manual selection of the defective ones. After the vibro-table, the briquettes enters the spray-chamber for applying the flavouring additive on a surface of the crispbreads. The spray-chamber works in a closed-loop mode, together with the two-tank system CEREX - 2 - TS, in which the flavouring additive is manufactured.

### Manufacturing the flavouring additive.

The flavouring additive is manufactured in the two-tank system CEREX - 2 - TS, with the ratio of the concentrated fruit/berry/vegetable juices to fruit or and/or berry puree may be both 1:1 and 1:2; 1:3; 1:4. Also, the ratio of the different kinds of juices in the mixture or the different kinds of puree in the mixture can be both 1:1 and 1:2; 1:3; 1:4.

Only natural flavours are used for manufacturing.

For manufacturing of the flavouring additive, water is measured according to the recipe and it is heated up to the temperature of 60° C. Subsequently, with the mixer turned on, the juice and puree are added in small portions and mixed until they are dissolved, then salt, cane sugar, if they are envisaged by the recipe, flavour and food dyes are added.

When manufacturing the flavoring additive, at first the concentrated apple juice (possibly pear or other kinds of concentrated juices) is heated up to the temperature of 52-53° C, with the mixer turned on, the flavour, puree and natural food dyes are added: carotenes or concentrated beetroot (carrot, pumpkin, etc.) juice.

The finished flavouring additive is fed into the spray-chamber through the flexible tubes, while being skipped through a sieve during 5 minutes. Subsequently, it is applied on a surface of the crispbreads on both sides with the help of the spray-chamber nozzles.

### Drying the crispbreads.

After applying the flavouring additive on both sides, the crispbreads are fed into the drying oven of the brand CEREX - IRG - 10000/1000.

There are two zones in the oven:

| | |
|---|---|
| The temperature in zone A is | 107-115° C |
| The temperature in zone B is | 107-115° C |
| The time of drying is | 4.45-7 min. |
| The speed of the conveyor is | 575 units. |

Moisture of the finished products should not exceed 3.2-4.8%.

This is followed by the steps of packaging and labeling and the subsequent transportation and storage of the finished product.

The given examples of a specific implementation allow determining an optimal ratio of the components for the rice crispbreads and obtaining the dietary crispbreads with the high organoleptic characteristics of quality and with a high nutritional value suitable for nutrition of young children from 1 year old.

## Claims

1. A rice crispbreads composition containing rice grits, water and a flavouring additive, wherein the flavouring additive includes concentrated fruit and/or vegetable juice or a mixture of fruit and/or vegetable juices in a mixture with berry and/or fruit puree, a natural flavour in the following ratio of the components, wt. %:
| | |
|---|---|
| - water | 0.7-9.8 |
| - rice grits | 50.0-66.0 |
| - concentrated fruit and/or vegetable juice or a mixture of fruit and/or vegetable juices | 6.0-36.0 |
| - berry and/or fruit puree or a mixture of berry and/or fruit puree | 6.0-36.0 |
| - a natural flavour | The rest. |

2. The composition of claim 1, wherein the flavouring additive additionally contains beta-carotene - 0.05-0.1 wt. % and/or iodized salt - 0.2-1.0 wt. %, and/or cane sugar - 20.0-24.0 wt. %.

3. A method for manufacturing of the rice crispbreads, according to which the raw materials composition includes the use of rice grits, water and a flavouring additive, which includes concentrated fruit and/or vegetable juice or a mixture of fruit and/or vegetable juices in a mixture with berry and/or fruit puree, a natural flavour; beta-carotene; a treatment of the rice grits by purifying them from impurities and subsequent moistening with water; extruding the finished rice grits with simultaneous baking and briquetting; applying the flavouring additive on a surface of the crispbreads by spraying, the components for manufacturing of the crispbreads being taken in the following ratio, wt. %.
| | |
|---|---|
| - water | 0.7-9.8 |
| - rice grits | 50.0-66.0 |
| - concentrated fruit and/or vegetable juice or a mixture of fruit and/or vegetable juices | 6.0-36.0 |
| - berry and/or fruit puree or a mixture of berry and/or fruit puree | 6.0-36.0 |
| - a natural flavour | The rest. |

4. The method of claim 3, wherein the raw materials for manufacturing of the crispbreads contain beta-carotene - 0.05-0.1 wt. % and/or iodized salt - 0.2-1.0 wt. % and/or cane sugar - 20.0-24.0 wt. %.

5. The method of claim 3, wherein moistening the rice grits is performed in the vertical mixers during 1-1.5 hours at mixing, while moisture of the finished moistened rice grits is 17.5-18.5%.

6. The method of claim 3, wherein extruding the moistened rice grits is performed under pressure of 130-140 bar between the press-forms heated up to 240-260° C.

7. The method of claim 3, wherein, when manufacturing the flavouring additive, at first the concentrated fruit and/or vegetable juice or their mixture is heated up to the temperature of 52-53° C.

8. The method of claim 3, wherein, at the step of moistening the rice grits, sunflower lecithin in the amount of 50 g per 100 kg of the grits is used as a surfactant, having beaten up preliminary this lecithin with room temperature water by a mixer.

9. The method of claim 3, wherein drying the crispbreads is performed at the temperature of 107-115° C.
